(19) Europäisches Patentamt / European Patent Office / Office européen des brevets

(11) **EP 4 635 596 A1**

(12) **EUROPEAN PATENT APPLICATION**
published in accordance with Art. 153(4) EPC

(43) Date of publication:
**22.10.2025 Bulletin 2025/43**

(21) Application number: **22968513.6**

(22) Date of filing: **15.12.2022**

(51) International Patent Classification (IPC):
***B01D 37/00*** *(2006.01)*

(52) Cooperative Patent Classification (CPC):
**B01D 37/00**

(86) International application number:
**PCT/JP2022/046283**

(87) International publication number:
**WO 2024/127603 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Japan Tobacco Inc.**
**Tokyo 105-6927 (JP)**

(72) Inventor: **NANASAKI, Yusuke**
**Tokyo 130-8603 (JP)**

(74) Representative: **Hoffmann Eitle**
**Patent- und Rechtsanwälte PartmbB**
**Arabellastraße 30**
**81925 München (DE)**

(54) **METHOD FOR PRODUCING PLANT EXTRACT**

(57) Provided is a method for producing a plant extract, the method comprising an inorganic salt addition step for adding an inorganic salt to a plant extraction solution and a filtration step for filtrating the plant extraction solution by ultrafiltration or microfiltration to produce a filtrate, in which the electrical conductivity of the plant extraction solution before and after the addition of the inorganic salt increases by 10 to 150 mS/cm in the inorganic salt addition step.

EP 4 635 596 A1

## Description

[TECHNICAL FIELD]

The present invention relates to a method for producing a plant extract.

[BACKGROUND ART]

The various components contained in, for example, the leaves, stems, or roots of plants each have unique characteristics and are used in a variety of applications. Extraction, which is one of the techniques for separating certain components from plants that contain a plurality of components, is utilized in a broad range of fields. However, plant extracts obtained by plant extraction may sometimes contain not only intended components but also undesirable components, and it is important for such specific undesirable components to be separated off.

Plant extracts obtained by extraction of tobacco plants, for example, include components that are important in terms of preferred taste, such as flavor components that have a good effect on flavor. Also included, meanwhile, are unwanted ingredients, such as: components that are a source of components of concern, such as proteins of nitrate nitrogen, which are precursors of tobacco-specific nitrosoamine (TSNA); or components such as proteins contained in many plants that do not directly affect the aroma, such as rubisco (RuBisCO). It is also commonly known that salting out results in the aggregation of proteins (NPL 1). Past research by the authors has shown that proteins 0.2 $\mu$m or more in size cannot be removed.

Examples of methods for separating out specific components from tobacco plant extract solutions include precipitation membrane separation with adjustment of the pH (PTL 1 and 2), filtration using activated carbon (PTL 3), and distillation (PTL 4); examples of methods for removing unwanted components such as proteins include methods utilizing enzymatic degradation (PTL 5), and methods referred to as ultrafiltration or microfiltration, which enable filtration by molecular weight (PTL 6 through 8). Examples of methods for separating nitrate nitrogen in particular include ultrafiltration or reverse osmosis membrane separation (PTL 9) and electrodialysis (PTL 10). Of these, electrodialysis is a useful technique because it can be used to remove the TSNA in tobacco plants (PTL 11 and 12).

[CITATION LIST]

[PATENT LITERATURE]

PTL 1: US 3959246 A1

PTL 2: JP 2016-511004 A

PTL 3: US 3424171 A1

PTL 4: US 4150677 A1

PTL 5: US 4727889 A1

PTL 6: US 5235992 A1

PTL 7: US 5301694 A1

PTL 8: JP 3-010667 A

PTL 9: International Publication No. 2004/098323

PTL 10: US 4302308 A1

PTL 11: CN 104351943 A

PTL 12: JP 2019-518442 A

[NON-PATENT LITERATURE]

NPL 1: Salting Out of Proteins Using Ammonium Sulfate Precipitation, Krisna C. Dong-Ly, and Sandra B. Gabelli, Methods in Enzymology, Vol. 541, 85-94 (2014)

[SUMMARY OF INVENTION]

[TECHNICAL PROBLEMS]

As described above, several methods for separating off impurities such as proteins from plant extracts are available, but there are also problems. In precipitation membrane separation with adjustment of the pH, for example, the use of alkali results in extra work such as the need to return the pH to acidic levels. Desired components may also potentially become degraded during distillation, and the use of filtration results in extra work such as membrane recycling or maintenance. Furthermore, a compromised separation capacity is a concern in electrodialysis when impurities are present in the extract.

An object of the present invention is therefore to provide a method for producing a plant extract in which, in order to allow impurities such as proteins to be efficiently separated off from the plant extract solution, proteins are aggregated via salting out, so as to maximize the size thereof, to allow proteins to be separated off, despite a large membrane pore size through which proteins ordinarily could not be filtered off, and to provide a plant extract from which unwanted salt components have been removed via electrodialysis after the proteins have been separated off.

[SOLUTION TO PROBLEM]

As a result of extensive research, the inventors arrived at the present invention upon discovering that a plant extract can be filtered via a specific method and then electrodialyzed to thereby solve the above problems.

[1] A method for producing a plant extract, comprising:

an inorganic salt addition step for adding an inorganic salt to a plant extract solution; and
a filtration step for filtering the plant extract solution to obtain a filtrate,
wherein
in the inorganic salt addition step, the electrical conductivity of the extract solution increases 10 to 150 mS/cm from before to after the addition of the inorganic salt.

[2] The method for producing a plant extract according to [1], comprising a step for removing the added inorganic salt via electrodialysis of the filtrate.

[3] The method for producing a plant extract according to [1] or [2], wherein the inorganic salt is at least one selected from the group consisting of sodium chloride, potassium chloride, magnesium chloride, calcium chloride, sodium sulfate, potassium sulfate, magnesium sulfate, calcium sulfate, copper sulfate, ferrous sulfate, zinc sulfate, sodium carbonate, potassium carbonate, calcium carbonate, sodium bicarbonate, potassium hydroxide, calcium hydroxide, sodium nitrite, tripotassium phosphate, tricalcium phosphate, dipotassium hydrogen phosphate, and disodium hydrogen phosphate.

[4] The method for producing a plant extract according to any of [1] through [3], wherein in the inorganic salt addition step, the total amount of inorganic salt added per 100 parts by weight of the plant extract is 20 parts by weight or less.

[5] The method for producing a plant extract according to any of [1] through [4], wherein the filtration in the filtration step is ultrafiltration or microfiltration.

[6] The method for producing a plant extract according to [5], wherein the ultrafiltration or microfiltration in the filtration step is performed by cross-flow filtration, and the membrane surface flow rate relative to the average pore size of the filtration membrane is 10 mL/min·cm$^2$ to 100 mL/min·cm$^2$.

[7] The method for producing a plant extract according to [5] or [6], wherein the filtration in the filtration step is microfiltration, and the average pore size of the filtration membrane is 3.0 μm or less.

[8] The method for producing a plant extract according to [5] or [6], wherein the filtration in the filtration step is ultrafiltration, and the average pore size of the filtration membrane is 100,000 Da or less.

[9] The method for producing a plant extract according to any of [1] through [8], wherein the plant extract solution includes water.

[10] The method for producing a plant extract according to any of [1] through [9], wherein plants from which the plant extract solution is extracted include tobacco plants.

[11] A method for producing a tobacco product that has: a tobacco rod, obtained by wrapping tobacco filler with rolling paper used for wrapping; and a mouthpiece portion; wherein said method comprises a step for adding a plant extract, that has been produced by the method for producing a plant extract according to any of [1] through [10], to at least one selected from the group consisting of the tobacco filler and the rolling paper.

[12] A method for producing an oral pouch product that has: an oral composition; and a pouch in which the oral composition is packaged,

said method comprising the step of adding a plant extract, that has been produced by the method for producing a plant extract according to any of [1] through [10], to the oral composition.

[ADVANTAGEOUS EFFECTS OF INVENTION]

The present invention can provide a method for producing a plant extract that allows a plant extract to be obtained by efficiently separating off impurities such as proteins from a plant extract solution, and that allows the amount of alkaloids to be controlled. The present invention can furthermore provide a method for producing a tobacco product or an oral pouch product using the plant extract.

[BRIEF DESCRIPTION OF DRAWINGS]

Fig. 1 is a schematic view of a tobacco product according to an embodiment of the present invention.
Fig. 2 is a schematic view of an electrically heated tobacco product according to an embodiment of the present invention.
Fig. 3 is a schematic view of an electrically heated tobacco product according to an embodiment of the present invention.
Fig. 4 is a graph showing the results of nitrate ion analysis following electrodialysis in an example.

Embodiments of the present invention are described in detail below, but these descriptions are only some examples (typical examples) of embodiments of the present invention, and are not the only possible details within the scope of the present invention.

As used herein, numerical ranges represented with a hyphen indicate a range where the numerical values before and after the hyphen indicate the minimum and maximum values, respectively, where "A-B" means at least A to no more than B.

<Method for Producing Plant Extract>

The method for producing a plant extract according to an embodiment of the present (referred to blow simply as "the method for producing a plant extract") is a method for producing a plant extract, comprising:

an inorganic salt addition step for adding an inorganic salt to a plant extract solution; and
a filtration step for filtering the plant extract solution by ultrafiltration or microfiltration to obtain a filtrate, wherein
in the inorganic salt addition step, the electrical conductivity of the extract solution increases 10 to 150 mS/cm from before to after the addition of the inorganic salt

The method for producing a plant extract according to the present embodiment may have steps other than the inorganic salt addition step and filtration step noted above.

[Extraction Step]

The method for producing a plant extract according to the present embodiment may have an extraction step in which a plant-containing plant dispersion is extracted to obtain an extract solution.

Macromolecules such as proteins in the extract solution that has been obtained in the extraction step can be aggregated via salting out to increase the size thereof, impurities larger than a specific size can be filtered off via cross-flow filtration, and specific substances can then furthermore by separated via electrodialysis to obtain a plant extract from which specific impurities have been removed. Examples of such impurities larger than a specific size include proteins that plants ordinarily contain, and the raw materials used in the extraction step therefore are not particularly limited, provided that they comprise plants.

(Plants)

The type of plant (to be extracted) that is used in the extraction step is not particularly limited, and may be a seed plant or a plant that is not a seed plant.

Seed plants may be gymnosperms or angiosperms, where examples of gymnosperms include Cycads such as Sago palms, Ginkgoales such as Ginkos, pines such as Pinus densiflora or Pine thunbergii, or Gnetophytes such as Gnetum, and examples of angiosperms include Solanaceae such as tobacco or eggplants, Asteraceae such as chrysanthemum, Orchidaceae such as orchids, legumes such as peas, grasses such as rice, Rubiaceae such as coffee,

Lamiaceae such as mint, Euphorbiaceae such as spurge, or Cyperaceae such as sedge. Examples of plants that are not seed plants include pteridophytes such as Pteridium aquilinum subsp. Japonicum or Osmunda japonica, bryophytes such as common liverwort or hornworts, or algae such as kombu (edible kelp) or Undaria pinnatifida.

Of the above plants, nicotine-containing plants, particularly tobacco (referred to below as "tobacco plants"), are preferred as the plant (specifically, the plant that is extracted and that is contained in the plant extract solution) used in the present embodiment in the method for producing a plant extract according to the present embodiment, in the interests of easily separating off unwanted ingredients, such as components that are a source of components of concern, such as proteins of nitrate nitrogen, which are precursors of tobacco-specific nitrosoamine (TSNA), or components such as proteins contained in many plants that do not directly affect the aroma, such as rubisco (RuBisCO).

The parts of the plant that are used are not particularly limited, and in seed plants, for example, may be any of leaves, stems, or roots, but are preferably leaves in the interests of easier extraction and availability.

Based on the preferred conditions noted above, leaves of tobacco (also referred to below as "tobacco leaf") are preferably used as the plant in the method of production according to the present embodiment.

Examples of types of tobacco leaf include, but are not particular limited to, yellow, Burley, orient, or native varieties, as well as Nicotiana tabacum and Nicotiana rustica varieties. These varieties can be used alone but can also be blended for use over the course from tobacco leaf to processed tobacco leaf in order to obtain a desired flavor.

(Plant Dispersion)

The plant dispersion is not particularly limited, provided that it is a plant-containing liquid; the solvent should be capable of dissolving the substance that is to be extracted, and may be an organic or inorganic solvent. For example, when a tobacco plant is used as the plant, the solvent is preferably capable of dissolving nicotinic acid, examples of which include water, ethylene glycol, propylene glycol, or ethanol, but water is preferred from the standpoint of safety and cost as well as availability. These substances may be included in the plant extract that is ultimately obtained.

The plant content in the plant dispersion is not particularly limited, but is usually 5% by weight or more, preferably 6% by weight or more, more preferably 7% by weight or more, even more preferably 8% by weight or more, and in particular preferably 10% by weight or more, and is usually 25% by weight or less, preferably 20% by weight or less, more preferably 15% by weight or less, and in particular preferably 13% by weight or less.

The solvent content in the plant dispersion is not particularly limited, but is usually 75% by weight or more, preferably 77.5% by weight or more, more preferably 80% by weight or more, even more preferably 82.5% by weight or more, and in particular preferably 85% by weight or more, and is usually 99% by weight or less, preferably 97.5% by weight or less, more preferably 95% by weight or less, even more preferably 92.5% by weight or less, and in particular preferably 90% by weight or less.

The plant dispersion may contain components other than plants and solvents, where examples of such other components include reducing sugars, natural sweeteners, artificial sweeteners, pH regulators, buffers, preservatives, or flavoring.

(Extraction)

The method of extraction is not particularly limited, and known methods can be employed, such as treatments in which the above plant dispersion is heated to obtain an extract solution. The heating temperature is not particularly limited, provided that the temperature allows the plant dispersion to be evaporated, and may be, for example, 50°C or above, preferably 55°C or above, more preferably 60°C or above, and even more preferably 70°C or above, and may be 100°C or below, preferably 95°C or below, more preferably 90°C or below, and even more preferably 88°C or below. This heating temperature is particularly advantageous when tobacco plants are used, specifically, when nicotine is extracted.

The heating time is not particularly limited and may be, for example, 5 minutes or more, preferably 10 minutes or more, more preferably 15 minutes or more, and even more preferably 30 minutes or more, and may be 6 hours or less, and more preferably 3 hours or less. This heating time is particularly advantageous when tobacco plants are used, specifically, when nicotine is extracted.

[Salting-Out Step]

The method for producing a plant extract according to the present embodiment comprises an inorganic salt addition step for adding an inorganic salt to a plant extract solution. The way in which the inorganic salt is added to the plant extract is not particularly limited, and can be added in any way.

The type of inorganic salt is not particularly limited, but is preferably at least one selected from the group consisting of sodium chloride, potassium chloride, magnesium chloride, calcium chloride, sodium sulfate, potassium sulfate, magnesium sulfate, calcium sulfate, copper sulfate, ferrous sulfate, zinc sulfate, sodium carbonate, potassium carbonate, calcium carbonate, sodium bicarbonate, potassium hydroxide, calcium hydroxide, sodium nitrite, tripotassium phosphate, tricalcium phosphate, dipotassium hydrogen phosphate, and disodium hydrogen phosphate. Of these, the inorganic salt is more preferably at least one selected from the group consisting of potassium chloride, potassium sulfate, magnesium sulfate, and ammonium sulfate, from the standpoint of usability in foods and pharmaceuticals. One of these inorganic salts may be used alone, or two or more may be used in any combination and ratio.

The amount of inorganic salt added to the plant extract solution is not particularly limited, but the amount added per 100 parts by weight of plant extract solution is preferably 2.04 parts by weight to 3.09 parts by weight, more preferably 3.09 parts by weight to 20 parts by weight, even more preferably 4.17 parts by weight to 18.5 parts by weight, and in particular preferably 5.00 parts by weight to 17.64 parts by weight.

Setting the amount to at least the lower limit in the above range can ensure sufficient aggregation of macromolecules such as proteins. Setting the amount to no more than upper limit in will help to control precipitation of inorganic salts.

The addition of the inorganic acid salt in the inorganic salt addition step will result in an increase in the electrical conductivity of the plant extract solution. The increase in electrical conductivity limits the amount of protein that can be dispersed or dissolved in water, and promotes the aggregation of macromolecules such as proteins. In the interests of ensuring sufficient aggregation of macromolecules such as proteins, the extent of the increase in electrical conductivity should be 10 to 150 mS/cm, preferably 20 to 130 mS/cm, more preferably 30 to 120 mS/cm, even more preferably 40 to 110 mS/cm, and in particular preferably 50 to 100 mS/cm.

The electrical conductivity can be determined using a compact electrical conductivity meter (LAQUAtwin, by HORIBA).

[Filtration Step]

The method for producing a plant extract according to the present embodiment comprises a filtration step in which the extract solution obtained in the extraction step and salting out step noted above is filtered by cross-flow filtration to obtain a filtrate.

Cross-flow filtration is a filtration procedure wherein the direction in which the feed flows and the direction of filtration are different from each other, such as perpendicular to each other (as used here, "perpendicular" includes approximately perpendicular). This method of filtration is suitable for concentration during mass filtration, and is advantageous in that the direction in which the feed flows and the direction of filtration are different from each other, which thus makes it easier to prevent particles from building up on or clogging the surface of the filtration membrane, and also saves time.

The method of cross-flow filtration is not particularly limited, and a known method can be employed, which can be carried out using a cross-flow filter (such as LabStak M2O, by Alfa Laval).

The filtration membrane configuration in cross-flow filtration is not particularly limited, and may be planar or cylindrical, but is preferably cylindrical in the interests of more compact filters and efficient filtration. Cylindrical filters can be, for example, 5 to 100 cm in diameter and can be 2 to 200 cm in longitudinal length. The feed (extract solution) flow configuration is also not particularly limited, and may or may not be circulating, but is preferably circulating in the interests of more compact filters and efficient filtration.

The filtration membrane material is not particularly limited, but is usually a polyester, a polypropylene, a polysulfone, a hydrophilic polysulfone, a polyethersulfone, or a fluororesin, for example.

The thickness of the filtration membrane is not particularly limited, but in the interests of preventing clogging and ensuring more efficient filtration is usually 0.01 $\mu$m or more, preferably 0.02 $\mu$m or more, more preferably 0.05 $\mu$m or more, even more preferably 0.07 $\mu$m or more, and in particular preferably 0.1 $\mu$m or more, and the upper limit may be, for example, 1 mm or less, 0.8 mm or less, 0.6 mm or less, 0.5 or less, and 0.3 mm or less.

The filtration membrane area can be set, as appropriate, depending on the intended use.

The average pore size of the filtration membrane is not particularly limited, but in the interests of preventing clogging and ensuring more efficient filtration is usually, when using a microfiltration membrane, 0.1 $\mu$m or more, and preferably 0.2 $\mu$m or more, and is also usually 5.0 $\mu$m or less, and preferably 3.0 $\mu$m or less. For the same reasons, when an ultrafiltration membrane is used, the pore size of the filtration membrane is usually 1,000 Da or more, preferably 10,000 Da or more, more preferably 50,000 Da or more, and even more preferably 20,000 Da or more, and is also usually 5,000,000 Da or less, preferably 2,500,000 Da or less, more preferably 200,000 Da or less, and even more preferably 100,000 Da or less. Unwanted ingredients such as components that are a source of components of concern (such as proteins of nitrate nitrogen, which are precursors of tobacco-specific nitrosoamine (TSNA)) or components such as proteins contained in many plants that do not directly affect the aroma (such as (RuBisCO) rubisco) usually have an average particle size of 50,000 Da (g/mol) to 80,000 Da, whereas nicotine has an average particle size of 162.23 Da, making the above pore size range particularly advantageous when tobacco plants are used because components such as protein can be efficiently separated from nicotine.

Multi-stage filtration using a plurality of membranes can also be employed in the interests of filtration efficiency.

The porosity of the surface of the filtration membrane is also not particularly limited.

The membrane surface flow rate relative to the average pore size of the filtration membrane is not particularly limited, but in the interests of preventing clogging and ensuring more efficient filtration is usually 10 mL/min·cm$^2$ or more, preferably 20 mL/min·cm$^2$ or more, more preferably 30 mL/min·cm$^2$ or more, and even more preferably 45 mL/min·cm$^2$ or more, and is usually 100 mL/min·cm$^2$ or less, preferably 80 mL/min·cm$^2$ or less, more preferably 70 mL/min·cm$^2$ or less, even more preferably 60 mL/min·cm$^2$ or less, and in particular preferably 55 mL/min·cm$^2$ or less. The above ranges are advantageous, particularly when tobacco plants are used, in terms of the average particle size of the unwanted components noted above that are included in tobacco plants.

The temperature of the extract solution while fed during cross-flow filtration is not particularly limited, but in the interests of preventing clogging and ensuring more efficient filtration is usually 5°C or above, preferably 10°C or above, more preferably 20°C or above, and in particular preferably 40°C or above, and is also usually 80°C or below, preferably 70°C or below, more preferably 60°C or below, and in particular preferably 50°C or below. The above ranges are advantageous, particularly when tobacco plants are used, in terms of the tobacco plant viscosity.

The content of the inorganic salt in the filtrate is not particularly limited, but is preferably 10% by weight or less, more preferably 5% by weight or less, preferably 3% by weight or less, preferably 1% by weight or less, and may be 0% by weight (below the detection limit). Meanwhile, the lower limit of the content is not particularly limited, and may be greater than 0% by weight, may be 0.5% by weight or more, or may be 2% by weight or more.

[Dialysis Step]

The method for producing a plant extract according to the present embodiment preferably comprises a dialysis step in which the added inorganic salt is removed via electrodialysis from the filtrate obtained in the filtration step above.

In electrodialysis, specific substances such as inorganic salts are removed because a device equipped with electrodes and an ion exchange membrane through which only ions can pass is used to allow ions in a solution to be passed through the ion exchange membrane via the application of voltage between the electrodes.

The method of electrodialysis is not particularly limited, and known methods can be employed (such as MICRO ACILYZER S3 or ACILYZER EX3B by ASTOM Corporation).

The filtration membrane configuration in the electrodialysis is not particularly limited, but is usually planar, and any number of 10 to 300 cm×5 to 100 cm filtration membranes can be used side by side, for example. The way in which a plurality of filtration membranes are used side by side is not particularly limited, and gaps may or may not be provided, but are preferably provided. The feed (extract solution) flow configuration is also not particularly limited, and may or may not be circulating, but is preferably circulating in the interests of more compact filters and efficient filtration.

The type and size of the electrodes used in electrodialysis can be determined, as appropriate, depending on the filtrate that is used or the device that is used to carry out the electrodialysis. The voltage applied between the electrodes is not particularly limited, but in the interests of ensuring efficient electrodialysis is usually 1.00 V or more, preferably 2.00 V or more, more preferably 3.00 V or more, even more preferably 4.00 V or more, and in particular preferably 5.00 V or more, but may be 10.00 V or more or 15.00 V or more, and is usually 60.00 V or less, preferably 50.00 V or less, more preferably 40.00 V or less, even more preferably 35.00 V or less, and in particular preferably 30.00 V or less. Particularly if the voltage is too high, water separation and decomposition (H$^+$ and OH$^-$) as well as separation and decomposition of other components will be a concern, and the voltage is therefore preferably 30.00 V or less. Controlling the voltage will also allow the concentration of each component contained in the plant extract to be controlled; for example, when a tobacco plant is used as the plant, the nicotine content of the plant extract can be modified depending on the magnitude of the voltage; as will be shown in the examples described below, the amount of nicotine can be efficiently reduced at 30.00V, and the amount of nicotine can be efficiently maintained at 10.00 V.

The material of the filtration membrane is not particularly limited, but is usually recycled cellulose, a cellulose ester, a polyacrylonitrile, a polysulfone, a polymethyl methacrylate, or an ethylene vinyl alcohol copolymer, for example.

The thickness of the filtration membrane is not particularly limited, but in the interests of preventing clogging and ensuring more efficient filtration is usually 0.05 μm or more, preferably 0.01 μm or more, more preferably 0.15 μm or more, even more preferably 0.17 μm or more, and in particular preferably 0.2 μm or more, and is usually 1 μm or less, preferably

0.8 μm or less, more preferably 0.5 μm or less, even more preferably 0.4 μm or less, and in particular preferably 0.3 μm or less.

The filtration membrane area can be set, as appropriate, depending on the intended use.

The average pore size of the filtration membrane is not particularly limited, but in the interests of preventing clogging and ensuring more efficient filtration is usually, when using an ultrafiltration membrane, 1,000 Da or more, preferably 1,500 Da or more, more preferably 2,000 Da or more, and even more preferably 2,500 Da or more, and is usually 100,000 Da or less, and even more preferably 50,000 Da or less. Unwanted ingredients such as components that are a source of components of concern (such as proteins of nitrate nitrogen, which are precursors of tobacco-specific nitrosoamine (TSNA)) or components such as proteins contained in many plants that do not directly affect the aroma (such as (RuBisCO) rubisco) usually have an average particle size of 50,000 g/mol (Da) to 80,000 g/mol (Da), whereas nicotine has an average particle size of 162.23 g/mol (Da), making the above pore size range particularly advantageous when tobacco plants are used because components such as protein can be efficiently separated from nicotine.

The porosity of the surface of the filtration membrane is also not particularly limited.

The membrane surface flow rate relative to the average pore size of the filtration membrane is not particularly limited, but in the interests of preventing clogging and ensuring more efficient filtration is usually 0.001 mL/min·cm² or more, preferably 0.002 mL/min·cm² or more, more preferably 0.003 mL/min·cm² or more, even more preferably 0.004 mL/min·cm² or more, and in particular preferably 0.005 mL/min·cm² or more, and is usually 40 mL/min·cm² or less, preferably 35 mL/min·cm² or less, more preferably 25 mL/min·cm² or less, and in particular preferably 20 mL/min·cm² or less. The above ranges are advantageous, particularly when tobacco plants are used, in terms of the average particle size of the unwanted components noted above that are included in tobacco plants.

The temperature of the extract solution while fed during electrodialysis is not particularly limited, and can be 10 to 40°C, for example.

The content of the inorganic salt in the filtrate (essentially, the plant extract) obtained in the filtration step is not particularly limited, but is preferably 10% by weight or less, more preferably 5% by weight or less, preferably 3% by weight or less, preferably 1% by weight or less, and may be 0% by weight (below the detection limit). Meanwhile, the lower limit of the content is not particularly limited, and may be greater than 0% by weight, may be 0.5% by weight or more, or may be 2% by weight or more.

[Preparation Step]

The method for producing a plant extract according to the present embodiment may have a preparation step for preparing a plant dispersion prior to the extraction step noted above. The method for producing a plant dispersion is not particularly limited, and includes, for example, methods in which raw materials that may be included in the above-mentioned plant dispersion liquid other than the solvent are introduced into the above-mentioned solvent, and the ingredients are stirred to homogeneity.

[Concentration Step]

The method for producing a plant extract according to the present embodiment may have a concentration step for concentrating the plant extract obtained in the dialysis step. The method of concentration is not particularly limited; a known method can be employed, and can be carried out using, for example, a device such as an evaporator. In the interests of a faster concentration time and greater efficiency, a lyophilization concentration method is preferably used; the lyophilization concentration method is not particularly limited, and a known method can be employed.

Another embodiment of the present invention is a plant extract obtained by the production method noted above. The plant extract according to the present embodiment is characterized by fewer impurities of a specific size. The plant extract obtained under the production method conditions noted above is advantageous when reducing the concentration of unwanted ingredients (such as components that are a source of components of concern, such as proteins of nitrate nitrogen, which are precursors of tobacco-specific nitrosoamine (TSNA), or components such as proteins contained in many plants that do not directly affect the aroma, such as (RuBisCO) rubisco), and is thus preferred when a tobacco plant is used as the plant. In the plant extract according to the present embodiment, the tobacco extract contains 15% by weight or less of components in the 50 Da (g/mol) to 50,000 Da range.

The viscosity of the plant extract at 25°C is not particularly limited, but in the interests of ease of handling is usually 0.5 mPa·s or more, and more preferably 1.0 mPa·s or more, and is usually 15.0 mPa·s or less, preferably 6.5 mPa·s or less, more preferably 6.0 mPa·s or less, and even more preferably 5.5 mPa·s or less. Viscosity can be determined using a tuning fork vibro viscometer (SV-A by A&D Company, Limited).

The pH of the plant extract at 25°C (when the plant is tobacco leaf) is not particularly limited, but in the interests of ease of use in tobacco products or oral pouch products is usually 7.5 or more, preferably 8.0 or more, and more preferably 8.5 or more, and is also usually more preferably 9.0 or less.

The pH of the oral composition at the above measurement temperature of 25°C can be determined using a pH analyzer (such as the Horiba LAQUA F-72, with a flat ISFET pH electrode) by introducing 20 mL of water per 2 g of the oral composition, shaking the contents for 10 minutes, and measuring the supernatant.

The instrument is calibrated using, for example, phthalate pH standard solution (pH 4.01), neutral phosphate pH standard solution (pH 6.86), or borate pH standard solution (pH 9.18) (all by Wako Pure Chemical Industries, Ltd.).

Applications for the plant extract obtained by the production method noted above are not particularly limited, and can be used in a broad range of fields depending on the concentrated components. When a tobacco plant is used as the plant, for example, a concentrated nicotine plant extract can be produced via the extraction, cross-flow filtration, and electrodialysis noted above, and can be used in, for example, the tobacco products and oral pouch products described below.

<Method for Producing Tobacco Product>

The method for producing a tobacco product in another embodiment of the present invention (referred to below simply as "method for producing a tobacco product") is a method for producing a tobacco product that has a tobacco rod portion (obtained by wrapping tobacco filler with rolling paper used for wrapping) and a mouthpiece portion, wherein said method comprises a step for adding a plant extract (that has been produced by the method for producing a plant noted above) to at least one selected from the group consisting of the tobacco filler and the rolling paper.

Except for the step of adding the plant extract, a known method can be used as the method for producing a tobacco product according to the present embodiment. As an example of a known method, the tobacco product can be produced by wrapping the tobacco rod portion and the mouthpiece portion with tipping paper.

The step of adding the plant extract is not particularly limited, provided that the step is established at any stage during the production of the tobacco product where the plant extract can be added to the tobacco filler in the tobacco rod portion and/or the rolling paper. For example, the plant extract may be added to the tobacco filler and/or rolling paper before the tobacco filler is wrapped with rolling paper, may be added to the tobacco filler and/or rolling paper after the filler has been wrapped, may be added after the tobacco rod portion has been produced, and may be added after the tobacco rod portion and mouthpiece portion have been wrapped with tipping paper.

The method for adding the plant extract to the tobacco filler and/or rolling paper is not particularly limited; for example, the plant extract may be added dropwise to the tobacco filler and/or rolling paper, the plant extract may be applied to the tobacco filler and/or rolling paper, and the tobacco filler and/or rolling may be dipped in the plant extract. The plant extract may also be added after residue obtained during the extraction of the tobacco plant has been dried, and the residue can be utilized as tobacco filler. Extract residue, that has been obtained when a tobacco plant is used as the plant in the extraction step during the production of the plant extract, can be used as the residue; from the standpoint of this sort of recyclability, the plant extract is preferably produced using a tobacco plant. The method for adding the plant extract is also not particularly limited, and methods such as spraying and kneading can also be used in addition to the dropwise addition, application, and dipping methods noted above.

In the interests of ensuring a sufficient amount of a flavoring component (such as nicotine), the amount of plant extract added per 100 parts by weight of the tobacco rod portion is usually 0.5 part by weight or more, preferably 1.0 part by weight or more, more preferably 2.0 parts by weight or more, and even more preferably 5.0 parts by weight or more, and is usually 20 parts by weight or less, preferably 15 parts by weight or less, more preferably 12.5 parts by weight or less, and even more preferably 10 parts by weight or less.

When a plant extract is used in the method for producing a tobacco product according to the present embodiment, the type of plant is not particularly limited; plant-derived flavoring components, for example, can be added to the tobacco product, but tobacco plants are preferably used, particularly in the interests of allowing nicotine levels to be controlled.

The tobacco product produced by the method for producing a tobacco product according to the present embodiment may be for cigarettes or may be for heat-not-burn tobacco products. An example of a tobacco product is described below, but each of the conditions is particularly advantageous for heat-not-burn tobacco products.

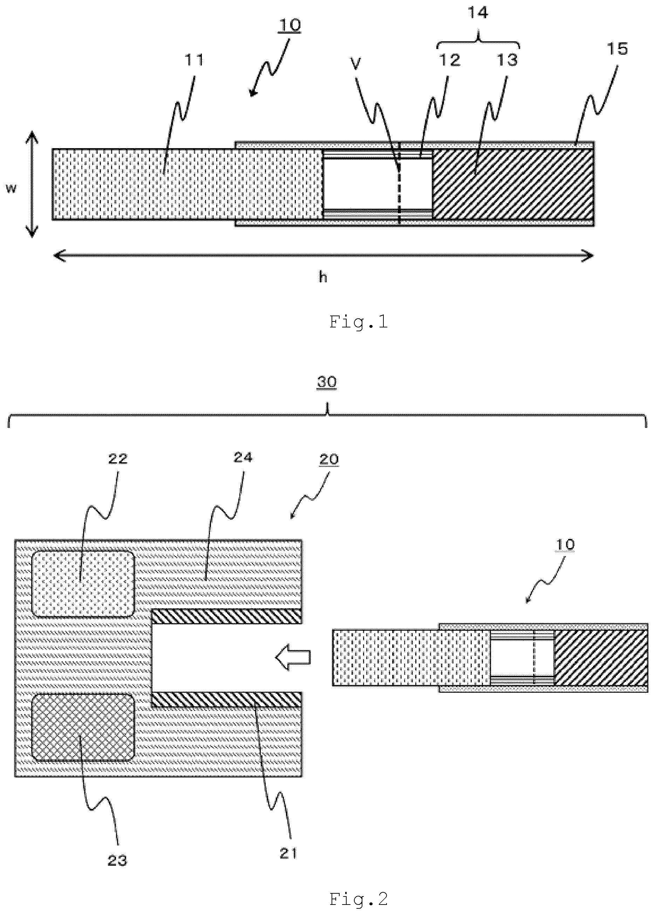

An example of a tobacco product is shown in Fig. 1. The tobacco product is described below with reference to Fig. 1.

The rod-shaped tobacco product 10 shown in Fig. 1 is a rod-shaped tobacco product comprising a tobacco rod portion 11, a mouthpiece portion 14, and tipping paper 15 wrapped around these. The mouthpiece portion may be any configuration, but Fig. 1 shows an embodiment that includes a cooling segment 12 and a filter segment 13 comprising a filter medium, wherein the cooling segment 12 is contiguously sandwiched between the tobacco rod portion 11 and the filter segment 13 in the axial (also referred to as "longitudinal") direction of the tobacco product 10, and an opening V is concentrically provided in the circumferential direction of the cooling segment 12. The opening V is usually a hole for promoting the inflow of air from the outside via user inhalation, where the inflow of air can lower the temperature of components and air flowing in from the tobacco rod 11.

In the tobacco product 10, components generated by the heating of the tobacco rod 11, for example, are delivered through the mouthpiece portion into the mouth of the user. Examples of components generated by heat include fragrance-derived flavoring components, tobacco leafderived nicotine or tar, or aerosol base-derived aerosol components. As used herein, aerosol base is a base for generating an aerosol.

The tobacco product 10 preferably has a columnar shape satisfying a shape in which the aspect ratio defined below is equal to or greater than 1.

$$\text{Aspect ratio} = h/w$$

The symbol w is the width of the bottom face of a columnar body (in the present specification, this is the width of the bottom face on the tobacco rod portion side), and h is the height, where h is preferably equal to or greater than w. **In** the present specification, the longitudinal direction is the direction represented by h. Thus, for the sake of convenience, the direction represented by h is still referred to as the longitudinal direction even when w is equal to or greater than h. The shape of the bottom face is not limited, and may be a polygon, a rounded polygon, a circle, or an ellipse, for example, where the width w is the diameter when the bottom face is circular, is the major axis when the shape is elliptical, is the diameter of the circumscribing circle when the bottom face is polygonal, or is the major axis of the circumscribing ellipse when the bottom face is a rounded polygon.

The longitudinal length h of the tobacco product 10 is not particularly limited, but is, for example, usually 40 mm or greater, preferably 45 mm or greater, and more preferably 50 mm or greater. The longitudinal length h is also usually 100 mm or less, preferably 90 mm or less, and more preferably 80 mm or less.

The width w of the bottom face of the columnar body of the tobacco product 10 is not particularly limited, and is, for example, usually 5 mm or greater, and preferably 5.5 mm or greater. The width w is also usually 10 mm or less, preferably 9 mm or less, and more preferably 8 mm or less.

The ratio of the lengths of the cooling segment and the filter segment (cooling segment: filter segment) along the longitudinal length of the tobacco product is not particularly limited, but from the standpoint of the amount of flavoring delivered is usually 0.60 to 1.40:0.60 to 1.40 and 0.80 to 1.20:0.80 to 1.20, more preferably 0.85 to 1.15:0.85 to 1.15, more preferably 0.90 to 1.10:0.90 to 1.10, and even more preferably 0.95 to 1.05:0.95 to 1.05.

Setting the ratio between the lengths of the cooling segment and the filter segment to within the above range allows a balance to be achieved between the cooling effect, the effect in suppressing loss due to adhesion of the generated vapor and aerosol to the inner wall of the cooling segment 121, and the function of the filter in adjusting the volume of air and the flavor, thereby making it possible to achieve good flavor and flavor intensity. In particular, a longer cooling segment can promote, for example, aerosol particle formation and produce good flavor, but if it is too long, substances passing through will end up becoming stuck to the inner wall.

The longitudinal air-flow resistance per tobacco product 10 unit is not particularly limited, but from the standpoint of ease of smoking is usually 8 mmH$_2$O or greater, preferably 10 mmH$_2$O or greater, and more preferably 12 mmH$_2$O or more, and is also usually 100 mmH$_2$O or less, preferably 80 mmH$_2$O or less, and more preferably 60 mmH$_2$O or less.

The airflow resistance is determined by using a filter airflow resistance meter by Cerulean, for example, in accordance with ISO Standards (ISO 6565:2015). The airflow resistance indicates the difference in air pressure between one end face (first end face) and another end face (second end face) when air flows at a predetermined air flow rate (17.5 cc/min) from the first end face to the second end face without any air passing through the side face of the tobacco product 10. The units are generally expressed in mmH$_2$O. The relationship between airflow resistance and tobacco product length is known to be proportional in the normally used length range (length of 5 mm to 200 mm), where the airflow resistance of the tobacco product doubles as the length doubles.

[Mouthpiece Portion]

The configuration of the mouthpiece portion is not particularly limited and, as shown in Fig. 1, can include a cooling segment 12 and a filter segment 13 comprising the filter medium noted above, wherein the cooling segment 12 is contiguously sandwiched between the tobacco rod portion 11 and the filter segment 13 in the axial (also referred to as "longitudinal") direction of the tobacco product 10.

(Filter Segment)

The filter segment 13 is not particularly limited, provided that it has the function of a common filter; a known filter segment configuration that is used in tobacco products can be employed, as appropriate. For example, tow consisting of synthetic fibers (referred to below simply as "tow") or a material such as paper that has been processed into a cylindrical shape can be used. Examples of common filter functions include adjusting the amount of air which is mixed when an aerosol, for example, is inhaled, moderating flavor, and moderating nicotine and tar, but not all of these functions need necessarily be provided. Preventing tobacco filler from falling out as the filtration function is controlled is also another important function in electrically heated tobacco products, which generate fewer components and tend to have a lower tobacco filler filling rate than cigarettes. The shape of the filter segment 13 can also be a known shape, such as a cylindrical shape. The method for producing the filter segment 13 is also not particularly limited, and a known method for producing filter segments can be employed, as appropriate.

(Cooling Segment)

The cooling segment 12 configuration is not particularly limited, and known cooling segment configurations used in tobacco products can be employed, as appropriate, such as a rod-shaped member that is contiguously sandwiched between a tobacco rod portion and a filter segment, and that typically has a cavity, the cylindrical (or other shaped) circumferential cross section of which is hollow (hollowed out). The method for producing the cooling segment 12 is not particularly limited, and known methods for producing cooling segments can be employed, as appropriate. In the cooling segment 12, as shown in Fig. 1, an opening V (also referred to in the art as a "ventilation filter (Vf)") may also be concentrically provided in the circumferential direction thereof.

[Tobacco Rod Portion]

The tobacco rod portion 11 configuration is not particularly limited, and known tobacco rod portion configurations used in tobacco products can be employed, as appropriate, such as a configuration in which the tobacco filler is wrapped with rolling paper. The method for producing the tobacco rod portion 11 is not particularly limited, and known methods for producing tobacco rod portions can be employed, as appropriate.
The tobacco filler is not particularly limited, and known tobacco filler, such as cut tobacco or reconstituted tobacco sheets, can be employed. The tobacco filler may also comprise an aerosol base material. Aerosol base materials are bases from which an aerosol is produced via heating, examples of which include glycerol, propylene glycol, triacetin, 1,3-butanediol, and mixtures thereof.

(Rolling Paper)

The rolling paper configuration is not particularly limited, and known configurations used in tobacco products can be employed, as appropriate, such as pulp-based rolling paper. The method for producing the rolling paper is not particularly limited, and known methods for producing rolling paper can be employed, as appropriate.
The pulp may be made of wood pulp such as conifer wood pulp and/or deciduous wood pulp, or produced with an admixture of non-wood pulp that is typically used in rolling paper for smoking products, such as flax pulp, hemp pulp, sisal pulp, or esparto.
Types of pulp which may be used include chemical pulp, ground pulp, chemiground pulp, and thermomechanical pulp, etc. which are obtained by means of kraft digestion, acid/neutral/alkaline sulfite digestion, and soda digestion, etc.

[Tipping paper]

The tipping paper 15 configuration is not particularly limited, and known configurations used in tobacco products can be employed, as appropriate, such as pulp-based tipping paper. The method for producing the tipping paper 15 is not particularly limited, and known methods for producing tipping paper can be employed, as appropriate, as can commercially available products.
The pulp may be made of wood pulp such as conifer wood pulp and/or deciduous wood pulp, or produced with an admixture of non-wood pulp that is typically used in rolling paper for smoking products, such as flax pulp, hemp pulp, sisal pulp, or esparto. A single type of such pulp may be used, or multiple types of pulp may be combined for use in any desired proportions. The tipping paper 15 may also comprise a single sheet but may comprise a plurality of sheets.

<Method for Producing Electrically Heated Tobacco Product>

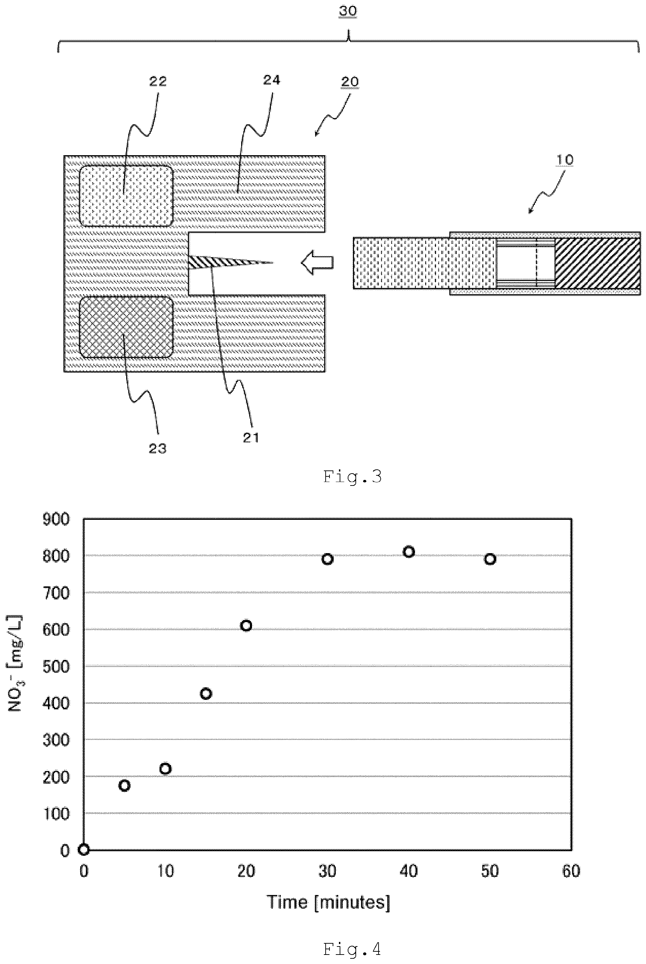

The method for producing an electrically heated tobacco product according to another embodiment of the present invention (also simply referred to as "method for producing an electrically heated tobacco product") is for an electrically heated tobacco product that is composed of an electrical heating device (comprising a heater member, a power unit serving as the powder source for the heater member, and a control unit for controlling the heater member) and a tobacco product (that is inserted so as to be in close contact with the heater member), where the tobacco product is produced by the method for producing a tobacco product noted above.
The configuration of the electrically heated tobacco product may be a configuration of the kind shown in Fig. 2, where the outer peripheral surface of the tobacco product 10 is heated, or may be a configuration of the kind shown in Fig. 3, where heating is effected from the inside of the tobacco rod portion 11 in the tobacco product 10. The electrical heating device 20 shown in Figs. 2 and 3 is provided with an air introduction hole, which is not illustrated here. The electrically heated tobacco product 30 is described with reference to Fig. 3. Some of the reference numerals representing the various components of the tobacco product shown in Fig. 1 do not appear in Figs. 2 and 3.

The electrically heated tobacco product 30 is used by inserting the tobacco product 10 described above into, so as to be in close contact with, the heater member 21 disposed inside the electrical heating device 20.

The electrical heating device 20 has a battery unit 22 and a control unit 23 inside a resinous framework 24, for example.

When the tobacco product 10 is inserted into the electrical heating device 20, the outer peripheral surface of the tobacco rod portion 11 is in contact with the heater member 21 of the electrical heating device 20, and all of outer peripheral surface of the tobacco rod portion 11 and some of the outer peripheral surface of the tipping paper are in contact with the heater member 21.

The heater member 21 of the electrical heating device 20 generates heat under the control of the control unit 23. The heat is transferred to the tobacco rod portion 11 of the tobacco product 10, thereby volatilizing the aerosol base material and flavoring components, for example, that are included in the tobacco filler of the tobacco rod portion 11.

The heater member 21 may be, for example, a sheet heater, a flat heater, or a cylindrical heater. Sheet heaters are heaters that are in the form of a flexible sheet, examples of which include heaters that comprise a heat-resistant polymer film such as a polyimide (about 20 to 225 $\mu$m thick). Flat heaters are heaters in the form of a flat, rigid plate (about 200 to 500 $\mu$m thick), examples of which include heaters that have a resistance circuit on a flat substrate, which serves as the heating unit. Cylindrical heaters are hollow or solid cylindrical heaters (about 200 to 500 $\mu$m thick), examples of which include heaters that have a resistance circuit on the outer surface of a cylinder made of metal, for example, which serves as the heating unit. Other examples include rod-shaped or conical heaters made of metal, for example, that have an internal resistance circuit, which serves as the heating unit. The cross-sectional shape of cylindrical heaters may be, for example, circular, elliptical, polygonal, or a rounded polygon shape. It is also possible to use a configuration in which an inductor is provided as the heater member 21, and a susceptor for heating the tobacco filler, for example, is introduced into the tobacco rod portion 11. In this configuration, power is supplied to the inductor by the control unit 23, and the susceptor is heated by induction heat, thereby allowing the tobacco filler, for example, to be heated. A configuration comprising a microwave generator as the heater member 21 can also be employed. In this configuration, power is supplied to the microwave generator by the control unit 23, allowing the tobacco filler, for example, in the tobacco rod portion 11 to be heated via microwave heating.

The sheet heaters, flat heaters, and cylindrical heaters noted above can be used in embodiments of the kind shown in Fig. 2, where the outer peripheral surface of the tobacco product 10 is heated. The flat heaters, rod-shaped heaters, or conical heaters noted above, on the other hand, can be used in embodiments of the kind shown in Fig. 3, where heating is effected from the inside of the tobacco rod portion 11 in the tobacco product 10.

The longitudinal length of the heater member 21 can be in the range of L$\pm$5, where L mm is the longitudinal length of the tobacco rod portion 11. The longitudinal length of the heater member 21 is preferably L mm or more in the interests of aerosol delivery, specifically, ensuring sufficient heat transfer to the tobacco rod portion 11 and ensuring sufficient volatilization of the aerosol base material and flavor components contained in the tobacco filler, and is preferably L+0.5 mm or less, L+1.0 mm or less, L+1.5 mm or less, L+2.0 mm or less, L+2.5 mm or less, L+3.0 mm or less, L+3.5 mm or less, L+4.0 mm or less, L+4.5 mm or less, or L+5.0 mm or less in the interests of controlling components that have an undesirable effect on flavor, for example.

The extent to which the tobacco product is heated (heating time and heating temperature) by the heater member 21 can be pre-set for each electrically heated tobacco product 30. For example, heating can be pre-set in such a way that the tobacco product 10 will be pre-heated for a given period of time after being inserted into the electrical heating device 20, so as to be heated until the temperature of the outer surface of the portion of the tobacco product 10 that is inserted into the electrical heating device 20 reaches X (°C), and the temperature is then kept at or below a constant temperature of X (°C).

From the standpoint of the delivered amount of heat-generated components, for example, the temperature X (°C) is preferably 80°C to 400°C. Specifically, the temperature can be 80°C, 90°C, 100°C, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, or 400°C.

Vapor containing for example, aerosol base-derived components or flavoring componentderived components, that have been produced from the tobacco rod portion 11 by the heat from the heater member 21, passes through the mouthpiece portion 14, that is composed of, for example, the cooling segment12 and filter segment 13, and reaches the user's mouth.

The opening V provided in the cooling segment 12 is preferably closer to the inhalation end, rather than the end on other side from the inhalation end in the area in contact with the electric heating device 20 of the cooling segment 12, in order to facilitate the inflow of air from the outside and to prevent heat-generated components or air from accumulating in the cooling segment 12. The opening for inserting the tobacco product 10 into the electrical heating device 20 may also be tapered to make it easier to insert the tobacco product 10.

<Method for Producing Oral Pouch Product>

The method for producing an oral pouch product in another embodiment of the present invention (referred to below simply as "method for producing an oral pouch product") is a method for producing an oral pouch product that has an oral composition and a pouch in which the oral composition is packaged, said method comprising a step for adding a plant extract, that has been produced by the method for producing a plant extract noted above, to the oral composition.

The step for adding the plant extract is not particularly limited, provided that the step is established at any stage during the production of the oral pouch product where the plant extract can be added to the oral composition. For example, in the production of the oral composition in the oral composition production step described below: a plant extract may be introduced together with other raw materials; a plant extract may be added to an oral composition that has been produced; and, in the packaging step described below, the oral composition may be packaged in a packaging material, and a plant extract may then be added to the packaged oral composition. A plant extract may also be added to residue, that has been obtained during the extraction of a tobacco plant and then dried, and the residue may be introduced into the oral composition. Extract residue (that has been obtained when a tobacco plant is used as the plant in the extraction step during the production of the plant extract) can be used as the residue; from the standpoint of this sort of recyclability, the plant extract is preferably produced using a tobacco plant. When the plant extract is added to the above dried residue, other ingredients such as a fragrance, a pH regulator, and an optional emulsifier can be added to prepare an oral composition, which is then packaged in a pouch to prepare an oral pouch product.

When a plant extract is used in the method for producing an oral pouch product according to the present embodiment, the type of plant is not particularly limited; plant-derived flavoring components, for example, can be added to the oral pouch product, but tobacco plants are preferably used, in the interests of allowing nicotine levels to be controlled, particularly when a smokeless tobacco product is produced. When a smokeless tobacco product is produced, nicotine may be provided (in the form of a plant extract obtained using a tobacco plant as the plant) to the oral pouch product, or the nicotine components described below may be added; both methods may be employed, but in the interests of controlling the nicotine level or ensuring easier handing, it is preferably provided at least in the form of a plant extract obtained using a tobacco plant as the plant.

In the interests of ensuring a sufficient amount of a flavoring component (such as nicotine), the amount of plant extract added per 100 parts by weight of the oral composition is usually 0.1 part by weight or more, preferably 3 part by weight or more, more preferably 5 parts by weight or more, and even more preferably 10 parts by weight or more, and is usually 50 parts by weight or less, preferably 40 parts by weight or less, more preferably 35 parts by weight or less, and even more preferably 20 parts by weight or less.

Except for the step of adding the plant extract, a known method can be used as the method for producing an oral pouch product according to the present embodiment. The production steps except for the step of adding the plant extract noted above may comprise, for example, the following oral composition production step and packaging step.

[Oral Composition Production Step]

The method for producing an oral pouch product may may comprise an oral composition production step. The method for producing an oral composition is not particularly limited, and known methods can be employed, as appropriate. An example of the production method is shown below.

A nicotine source and an optional base material component, for example, are first mixed in a mixer to obtain a mixture. Water is added and the mixture is heated as needed.

A fragrance and a humectant are then optionally added, and can be further stirred and mixed to obtain a mixture.

A heating treatment may also be carried out, as needed, if the mixture has not been heated. A drying treatment may also be carried out after the mixture has been prepared. A cooling treatment may then be carried out. Cooling may be effected via natural cooling or with the use of some cooling means. Drying will allow the moisture content, for example, of the above mixture to be adjusted to a desired numerical value between 5 and 55% by weight. This will make it easier to adjust the moisture content of the oral composition as intended.

[Packaging Step]

The oral composition obtained in the oral composition production step is packaged in a packaging medium to obtain a pouch product (packaging step). The packaging method is not particularly limited, and a known method can be employed, such as a method in which the oral composition is introduced into a pouch-shaped nonwoven fabric and then sealed.

After the oral composition has been introduced into the packaging medium and the packaging medium has then been sealed in the packaging step, water may furthermore be added in order to obtain an oral composition having a desired moisture content (water addition step). If, for example, the target water content of the oral composition is 50% by weight but the water content of the oral composition that has been obtained in the above oral composition production step is 15% weight, the remaining 35% by weight of water is added.

An example of an oral pouch product is described below.

The oral pouch product comprises, for example, an oral composition that contains a base material, and a pouch in which the oral composition is packaged.

[Oral Composition]

The make up of the oral composition is not particularly limited, provided that it comprises at least a base material. The oral composition according to the present embodiment is a generic term for any substance contained in the pouch. **In the interests of preventing the oral composition from leaking out of the pouch, the oral composition is preferably not a liquid, and is preferably, for example, a solid or gel-like substance, or mixture thereof.**

(Base Material)

The oral composition contains a base material. The type of base material is not particularly limited; polysaccharides and porous structures capable of absorbing and retaining moisture, for example, can be employed. Specifically, the base material is preferably one or more selected from the group consisting of cellulose, microcrystalline cellulose (MCC), spherical cellulose, and porous cellulose, where cellulose is more preferable in terms of the degree of freedom in adjusting the bulk density of the oral composition and in terms of being colored white. These substances may be used alone, or two or more of any combination and any proportion may be used.

(Nicotine)

When an oral pouch product is used for applications such as smokeless tobacco, the oral composition may contain nicotine, but the way in which the nicotine is contained is not particularly limited; the nicotine may be added via the addition of a plant extract that has been obtained using a tobacco plant as the plant, but nicotine may also be introduced into the oral composition by a method other than the use of a plant extract, either as as alternative, or in addition, thereto. The configuration of nicotine that has been introduced by a method other than the addition of a plant extract is not particularly limited; for example, it may be introduced by using tobacco leaf, processed tobacco leaf, or an extract of a nicotine-containing substance such as tobacco leaf; nicotine in the form of a compound may be introduced; and a nicotine-bearing substance such as a nicotine salt or stabilized nicotine (such as nicotine supported on an ion-exchange resin) may also be introduced. Examples of nicotine-supporting substances include, as noted above, substances comprising nicotine supported on an ion exchange resin; when nicotine is supported on the ion-exchange resin, the ion-exchange resin is used as the support.

Examples of processed products for when processed tobacco leaf is used as the nicotine source include tobacco powder obtained by grinding tobacco leaf.

Tobacco powder may include, for example, dried tobacco leaf lamina cut shreds, fine powder, and fibers, and can be prepared by the following methods As used herein, tobacco leaf may include the mesophyll (lamina), ribs (stems), and roots. The above tobacco filler may include elements derived from tobacco leaf mid-ribs or roots, in addition to tobacco powder that is essentially obtained from the tobacco leaf lamina.

The oral composition may comprise substances other than the base material or nicotine noted above (other substances), such as humectants, pH regulators, gelling agents, gelling aids, water, fragrances, sweeteners, bitterness inhibitors, whitening agents, and emulsifiers.

The content of other substances in the oral composition is not particularly limited, and the amount in which substances (the preferred content of which has not been described) are blended can be adjusted, as appropriate, depending on product design.

[Pouch]

The pouch (packaging medium) is not particularly limited, and a known material can be used, provided that it is capable of packaging the above oral composition, is not water-soluble, and is permeable to liquids (such as water or saliva) or water-soluble components in the oral composition. Examples of pouch materials include cellulose-based non-woven fabrics; commercially available non-woven fabrics may be used. A pouch product can be produced by forming a sheet consisting of such a material into a pouch shape, introducing the oral composition therein, and sealing it by means such as heat sealing.

The pouch may contain any ingredient, such as raw materials for adjusting aroma or flavor, fragrances, additives, tobacco extracts, or dyes. The way in which these components are contained is not particularly limited, and include application onto the pouch surface, soaking, or the introduction of fibers when consisting of said fibers.

The appearance of the pouch is also not particularly limited; the appearance may be nontransparent, but also may be translucent or transparent, in which case the oral composition packaged in the pouch will be visible.

[Pouch Product]

The pouch product is not particularly limited, provided that it has the above pouch in which the above oral composition is packaged (the above oral composition is encapsulated in the above pouch).

The size and weight of the pouch product are not particularly limited; the size of the pouch product prior to use may be 25 mm to 40 mm or 28 mm to 38 mm on the long side, and may be 10 mm to 20 mm or 14 mm to 18 mm on the short side. The weight of the pouch product prior to use may be 0.1 g to 2.0 g or 0.3 g to 1.0 g.

The proportion of the weight of the oral composition relative to the total weight of the pouch product is not particularly limited, but is usually 80% by weight or more, preferably 85% by weight or more, and more preferably 90% by weight or more, and is usually 99% by weight or less, preferably 97% by weight or less, and more preferably 95% by weight or less.

To determine the characteristics herein, measurement samples were held for 48 hours prior to measurement in the same environment as the environment in which the characteristics were to be determined. Unless otherwise specifically noted, the measurement temperature was ambient temperature (22±2°C), the measurement humidity was ambient humidity (60±5 RH), and the measurement pressure was atmospheric pressure.

<Oral Pouch Product Applications>

Examples of applications (modes of use) of the oral pouch product include, but are not particularly limited to, oral tobacco such as chewing tobacco, snuff, or pressed tobacco, or nicotine-containing formulations referred to as nicotine pouches. They are inserted between the lips and the gums in the mouth to provide enjoyable aroma and taste.

EXAMPLES

<Experiment 1>

[Extraction Step]

Tobacco leaf and water were mixed in a 1:7 weight ratio, the mixture was extracted for 1 hour at 85°C, and the solids and liquid were separated via crude filtration of the solids using nonwoven fabric, giving an extract solution.

[Salting-Out Step]

Salt (sodium chloride) was added to, and dissolved in, the extract solution to a concentration of 5% by weight (specifically, 5.26 parts by weight per 100 parts by weight of extract solution), giving a salting-out solution.

[Filtration Step]

The salting-out solution was filtered via metal membrane filtration (3 μm), giving a filtrate (after the metal membrane filtration).

A cross-flow filter (LabStak M2O, by Alfa-Laval) was used under the following conditions to further filter the filtrate (post-metal membrane filtration), giving a filtrate (post cross-flow filtration).

· Average pore size of filtration membrane (filter): 100,000 Da

· Thickness of filtration membrane (filter): 1 μm

· Membrane surface flow rate relative to average pore size of filtration membrane: 50 mL/min · cm$^2$

[Dialysis Step]

The filtrate (post-cross-flow filtration) was electrodialyzed using an electrodialyzer (MICRO ACILYZER S3, by ASTOM Corporation) under the following conditions, giving a plant extract.

· Applied voltage: 10.00 V

· Filtration membrane surface area: 0.055 m$^2$

· Average pore size of filtration membrane (filter): 5,000 Da

· Thickness of filtration membrane (filter): 0.2 μm

· Membrane surface flow rate relative to average pore size of filtration membrane: 0.004 mL/min · cm$^2$

<Determination of Extent of Protein Residue>

Plant extracts were analyzed using a spectrophotometer (SP300, by Takara Bio Inc.) to assess filtration-induced protein loss. Specifically, 20 μL each of BSA standard solution and either the salting-out solution after the salting-out step, the filtrate obtained after metal membrane filtration (post-metal membrane filtration), or the filtrate obtained after cross-flow filtration (post-cross-flow filtration) were aliquoted, 1 m of Bradford Dye Reagent was added and mixed therein, and a reaction was brought about for 5 minutes at a room temperature of 25°C. After the reaction, the extent of protein residue was determined based on the absorbance of the the solution at 595 nm (BSA protein absorbance). The results of analysis are shown in Table 1.

Table 1 shows that the salting-out step made it possible to remove even some proteins that have conventionally been difficult to filter out.

<Post-Electrodialysis Salinity Analysis>

The salinity was analyzed using a salinity refractometer (Master-S28α, by Atago Co., Ltd.). Specifically, sample solution obtained after the addition of the salt and either the salting-out solution after the salting-out step, the filtrate obtained after the metal membrane filtration (post-metal membrane filtration), the filtrate obtained after cross-flow filtration (post-cross-flow filtration), or the plant extract obtained after the dialysis step were added dropwise into the salinity refractometer, and the scale mark numerical value was read to ascertain the salinity. The results of analysis are shown in Table 1.

Table 1 shows that the 5% salinity decreased at each filtration step, allowing all of the salt to be removed following electrodialysis.

[Table 1]

[Table 1]

|  | Salting-out solution | Filtrate (post-metal membrane filtration) (3 μm) | Filtrate (post-cross-flow filtration) (100,000Da) | Plant extract |
|---|---|---|---|---|
| Extents of protein residue [μg/ml] | 1228.5 | 880.8 | 775.7 | Not measured |
| Salinity [% by weight] | 5 | 2.50 | 0.85 | 0 |

<Experiment 2>

The electrical conductivity of each salting-out solution was then determined as the amount of salt added during the salting-out step was varied in order to study the relationship between the amount of salt added and the electrical conductivity.

Specifically, the electrical conductivity was determined using a compact electrical conductivity meter (LAQUAtwin, by HORIBA). The results of analysis are shown in Table 2. The salting-out solution in Experiment 1 above corresponds to the salting-out solution having a salinity of 5% in Table 2. The difference (increase) in electrical conductivity in Table 2 is also expressed as the value obtained by subtracting the electrical conductivity at a salinity of 0.0% by weight from the electrical conductivity of each electrodialysis solution.

The brix of each salting-out solution was also determined using a hand-held refractometer (Master 53$\alpha$, by Atago). The results of analysis are shown in Table 2.

Table 2 shows that the addition of even 1.0% sodium chloride resulted in an increase in electrical conductivity to 13.63 mS/cm, and that the addition of 20.0% sodium chloride resulted in an increase in electrical conductivity to 147.13 mS/cm.

[Table 2]

[Table 2]

| Salinity | Brix | Electrical conductivity | Difference in electrical conductivity |
|---|---|---|---|
| [% by weight] | [%] | [mS/cm] | [mS/cm] |
| 0.0 | 5.5 | 16.77 | 0 |
| 1.0 | 6.5 | 30.4 | 13.63 |
| 2.5 | 8.0 | 45.6 | 28.83 |
| 5.0 | 10.0 | 67.9 | 51.13 |
| 10.0 | 15.0 | 111.8 | 95.03 |
| 12.5 | 17.5 | 123.5 | 106.73 |
| 15.0 | 19.5 | 144.2 | 127.43 |
| 20.0 | 23.5 | 163.9 | 147.13 |

<Experiment 3>

<Post-Electrodialysis Nitrate Ion Analysis>

Plant extracts were produced under the same conditions as in Experiment 1 above, except that the voltage applied in the dialysis step was changed from 10.00 V to 50.00 V. The nitrate ion ($NO_3^-$)) concentration in the plant extracts following electrodialysis in Experiment 1 was determined. Specifically, concentrated phases (the side to which electrolytes are transferred via electrodialysis from plant extract-containing sample phases) were assessed by analyzing samples, which had been taken before electrodialysis (0 min) and 5, 10, 15, 20, 30, 40, and 50 min after electrodialysis, using a simplified water quality analyzer (PACKTEST Nitrage, by Kyoritsu Chemical Research Institute Co., Ltd.), and by furthermore deriving the nitrate ion concentrations of the sample phases before and after electrodialysis. The results of assessment are shown in Table 3 and Fig. 4.

At each of the above time points, the salinity and electrical conductivity of the aqueous phases and hexane phases (supernatant) were also determined. The salinity and electrical conductivity were determined in the same manner as in Experiment 1 above. The results of analysis are shown in Table 3.

The brix of each salting-out solution was also determined in the same manner as in Experiment 2 above. The results of analysis are shown in Table 3.

The minus sign in Table 3 indicates "not determined."

[Table 3]

## EP 4 635 596 A1

[Table 3]

| Time | Brix | Sample phase | | | Concentrated phase | | |
|---|---|---|---|---|---|---|---|
| | | Electrical conductivity | $NO_3^-$ | Salinity | Electrical conductivity | $NO_3^-$ | Salinity |
| [minutes] | [%] | [mS/cm] | [mg/L] | [% by weight] | [mS/cm) | [mg/L] | [% by weight] |
| 0 | 9.5 | 73 | 650 | 7.5 | 0.205 | 1.12 | 0 |
| 5 | 9.0 | 57.8 | - | 6.8 | 20.9 | 175 | 1 |
| 10 | 8.5 | 52.8 | - | 6.2 | 39.1 | 220 | 2 |
| 15 | 7.5 | 47.2 | - | 5.8 | 40.7 | 425 | 3.1 |
| 20 | 7.5 | 41.1 | - | 5 | 66.1 | 610 | 4 |
| 30 | 6.5 | 28.6 | - | 4 | 89.1 | 790 | 5.8 |
| 40 | 6.5 | 19.07 | - | 3.5 | 96.6 | 810 | 6.8 |
| 50 | 5.0 | 14.12 | Below detection threshold (1 ppm) | 3 | 98.2 | 790 | 6.8 |

Table 3 shows that the method for producing a plant extract according to the present embodiment allowed the nitrate ion concentration in plant extracts to be reduced.

As noted above, the present invention can provide a method for producing a plant extract in which a plant extract is obtained by efficiently separating off impurities such as proteins from a plant extract solution. The present invention can furthermore provide a method for producing a tobacco product or an oral pouch product using the plant extract, wherein the amount of desired components can be controlled as the amount of impurities such as proteins is reduced.

REFERENCE SIGNS LIST

10    Tobacco product
11    Tobacco rod portion
12    Cooling segment
13    Filter segment
14    Mouthpiece portion
15    Tipping paper
V    Opening
20    Electrical heating device
21    Heater member
22    Battery unit
23    Control unit
24    Framework
30    Electrically heated tobacco product

**Claims**

1.    A method for producing a plant extract, comprising:

an inorganic salt addition step for adding an inorganic salt to a plant extract solution; and a filtration step for filtering the plant extract solution to obtain a filtrate,
wherein
in the inorganic salt addition step, the electrical conductivity of the extract solution increases 10 to 150 mS/cm from before to after the addition of the inorganic salt.

2.    The method for producing a plant extract according to Claim 1, comprising a step for removing the added inorganic salt via electrodialysis of the filtrate.

3. The method for producing a plant extract according to Claim 1 or 2, wherein the inorganic salt is at least one selected from the group consisting of sodium chloride, potassium chloride, magnesium chloride, calcium chloride, sodium sulfate, potassium sulfate, magnesium sulfate, calcium sulfate, copper sulfate, ferrous sulfate, zinc sulfate, sodium carbonate, potassium carbonate, calcium carbonate, sodium bicarbonate, potassium hydroxide, calcium hydroxide, sodium nitrite, tripotassium phosphate, tricalcium phosphate, dipotassium hydrogen phosphate, and disodium hydrogen phosphate.

4. The method for producing a plant extract according to any of Claims 1 through 3, wherein in the inorganic salt addition step, the total amount of inorganic salt added per 100 parts by weight of the plant extract is 20 parts by weight or less.

5. The method for producing a plant extract according to any of Claims 1 through 4, wherein the filtration in the filtration step is ultrafiltration or microfiltration.

6. The method for producing a plant extract according to Claim 5, wherein the ultrafiltration or microfiltration in the filtration step is performed by cross-flow filtration, and the membrane surface flow rate relative to the average pore size of the filtration membrane is 10 mL/min·cm$^2$ to 100 mL/min·cm$^2$.

7. The method for producing a plant extract according to Claim 5 or 6, wherein the filtration in the filtration step is microfiltration, and the average pore size of the filtration membrane is 3.0 μm or less.

8. The method for producing a plant extract according to Claim 5 or 6, wherein the filtration in the filtration step is ultrafiltration, and the average pore size of the filtration membrane is 100,000 Da or less.

9. The method for producing a plant extract according to any of Claims 1 through 8, wherein the plant extract solution includes water.

10. The method for producing a plant extract according to any of Claims 1 through 9, wherein plants from which the plant extract solution is extracted include tobacco plants.

11. A method for producing a tobacco product that has: a tobacco rod, obtained by wrapping tobacco filler with rolling paper used for wrapping; and a mouthpiece portion; wherein said method comprises a step for adding a plant extract, that has been produced by the method for producing a plant extract according to any of Claims 1 through 10, to at least one selected from the group consisting of the tobacco filler and the rolling paper.

12. A method for producing an oral pouch product that has: an oral composition; and a pouch in which the oral composition is packaged,
said method comprising the step of adding a plant extract, that has been produced by the method for producing a plant extract according to any of Claims 1 through 10, to the oral composition.

Fig.1

Fig.2

Fig.3

Fig.4

## INTERNATIONAL SEARCH REPORT

| International application No. |
| --- |
| **PCT/JP2022/046283** |

| A. | CLASSIFICATION OF SUBJECT MATTER |
| --- | --- |

*B01D 37/00*(2006.01)i
FI:   B01D37/00

According to International Patent Classification (IPC) or to both national classification and IPC

| B. | FIELDS SEARCHED |
| --- | --- |

Minimum documentation searched (classification system followed by classification symbols)

A01, A23, A24, A61, B01D, C11, C12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 3-22971 A (CALPIS FOOD IND CO LTD) 31 January 1991 (1991-01-31) claims, p. 2, upper left column, line 20 to upper right column, line 5, p. 10, lower left column, line 4 to lower right column, line 2 | 1-6, 8-9, 12 |
| A | | 7, 10-11 |
| X | CN 111035697 A (GELU PHARMACEUTICAL CO LTD) 21 April 2020 (2020-04-21) claims, example 1 | 1, 3-7, 9 |
| A | | 2, 8, 10-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2023** | **14 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/046283**

| Patent document cited in search report | | | Publication date (day/month/year) | Patent family member(s) | Publication date (day/month/year) |
|---|---|---|---|---|---|
| JP | 3-22971 | A | 31 January 1991 | (Family: none) | |
| CN | 111035697 | A | 21 April 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3959246 A1
- JP 2016511004 A
- US 3424171 A1
- US 4150677 A1
- US 4727889 A1
- US 5235992 A1
- US 5301694 A1
- JP 3010667 A
- WO 2004098323 A
- US 4302308 A1
- CN 104351943 A
- JP 2019518442 A

**Non-patent literature cited in the description**

- **KRISNA C. DONG-LY** ; **SANDRA B. GABELLI**. Salting Out of Proteins Using Ammonium Sulfate Precipitation. *Methods in Enzymology*, 2014, vol. 541, 85-94